# EUROPEAN PATENT APPLICATION

(11) **EP 1 693 615 A1**
(43) Date of publication of application: **23.08.2006**
(21) Application number: 05003743.1
(22) Date of filing: 22.02.2005
(51) Int. Cl.: F21V 13/04, F21S 10/02

(54) **Illuminating device having a light-blending unit**

(71) Applicant: Moduled Inc., Yung-Kang City, Tainan Hsien (TW); Sun, Ching-Cherng, Yang-Mei Chen, Tao-Yuan Hsien (TW)
(72) Inventor: Sun, Ching-Cherng, Yang-Mei Chen Tao-Yuan Hsien (TW)
(74) Representative: Altenburg, Udo

(57) **Abstract**

An illuminating device includes a tube body (31), and a plurality of light-emitting members (4) provided in the tube body (31). A reflective film (312) covers one of inner and outer wall faces (310, 311) of the tube body (31). A transparent block body (32) fixed within the receiving space (33) has at least one rough surface (321) formed by a surface-roughening treatment for dispersion of light. A light-gathering unit (5) is located externally of a top open end of the tube body (31) for gathering the light exiting through the top open end and then projecting the light rays upwardly.

## Description

The invention relates to an illuminating device, more particularly to an illuminating device that has a light-blending unit.

Light-emitting diodes (LEDs) are currently employed in many different illuminating devices, such as flashlights, vehicular lamps, large projectors, etc., because of their long service life and low heat emission.

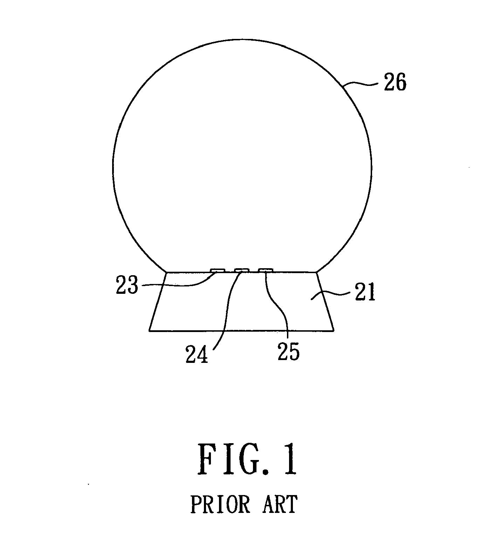

Referring to Figure 1, a conventional illuminating device includes a main seat 21, three light-emitting members installed on the main seat 21 in a triangular manner, and a lamp cover 26 fixed to the main seat 21. The light-emitting members include red, green and blue light-emitting diodes 23, 24, 25. The lamp cover 26 is ball-shaped, and covers the red, green and blue light-emitting diodes 23, 24, 25 so that the red, green and blue light rays discharged therefrom are blended and then emitted out of the lamp cover 26.

Since the lamp cover 26 of the aforementioned illuminating device is ball-shaped, although the red, green and blue light rays of light-emitting diodes 23, 24, 25 can be blended to provide a white light, the resulting white light is not uniform. For example, the light rays emitting from the lamp cover 26 at a location proximate to the red light-emitting diode 23 is more red. The same is true for the light rays emitting from the lamp cover 26 at a location proximate to the green and blue light-emitting diodes 24, 25, in which case, the light rays are more green and blue, respectively. Furthermore, light energy cannot be gathered and oriented toward a single direction so that the conventional illuminating device has no projection capabilities as required by a flashlight, a vehicular lamp, an optical projection device, etc.

Therefore, the object of the present invention is to provide an illuminating device that has a light-blending unit and that is capable of overcoming the aforementioned drawbacks of the prior art.

According to one aspect of this invention, a light-blending unit comprises a tube body defining a receiving space adapted to transmit light, and including inner and outer wall faces, and a top open end for passage of light rays therethrough. The inner wall face has a rough surface formed by a surface-roughening treatment for dispersion of light.

According to another aspect of this invention, a light-blending unit comprises a tube body capable of light reflection, and a transparent block body. The tube body defines a receiving space that is adapted to transmit light and having a top open end for passage of light rays therethrough. The transparent block body is fixed within the receiving space, and has top and bottom faces, and a rough surface formed by a surface-roughening treatment for dispersion of light.

According to yet another aspect of this invention, an illuminating device comprises a tube body and a plurality of light-emitting members. The tube body defines a receiving space adapted to transmit light, and includes inner and outer wall faces, and a top open end for passage of light rays therethrough. The inner wall face has a rough surface formed by a surface-roughening treatment for dispersion of light. The light-emitting members are provided for emitting light rays into the receiving space. The light rays have at least one predetermined color.

According to still another aspect of this invention, an illuminating device comprises a tube body capable of light reflection, a transparent block body, and a plurality of light-emitting members. The tube body defines a receiving space that is adapted to transmit light, and has a top open end for passage of light rays therethrough. The transparent block body is fixed within the receiving space, and has top and bottom faces, and a rough surface formed by a surface-roughening treatment for dispersion of light. The light-emitting members are provided for emitting light rays into the receiving space. The light rays have at least one predetermined color.

Other features and advantages of the present invention will become apparent in the following detailed description of the preferred embodiments with reference to the accompanying drawings, of which:
Figure 1 is a schematic view of a conventional illuminating device;
Figure 2 is a sectional view of the first preferred embodiment of an illuminating device according to the present invention;
Figure 3 is an enlarged sectional view of a block body of the first preferred embodiment;
Figure 4 is a sectional view of the second preferred embodiment of an illuminating device according to the present invention;
Figure 5 is a sectional view of the third preferred embodiment of an illuminating device according to the present invention; and
Figures 6 to 11 illustrate various alternative configurations of the illuminating device of the present invention.

Before the present invention is described in greater detail, it should be noted that like elements are denoted by the same reference numerals throughout the disclosure.

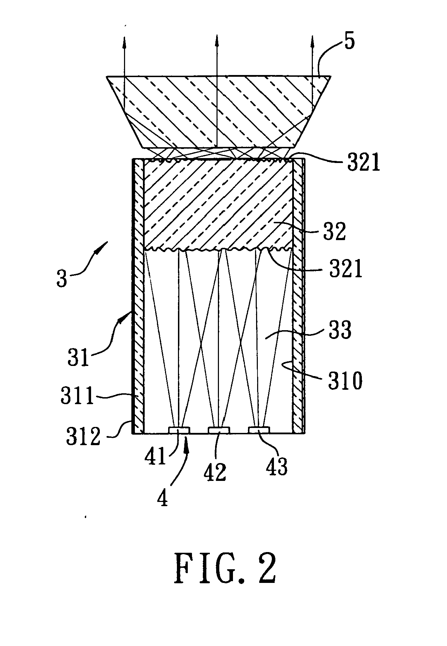

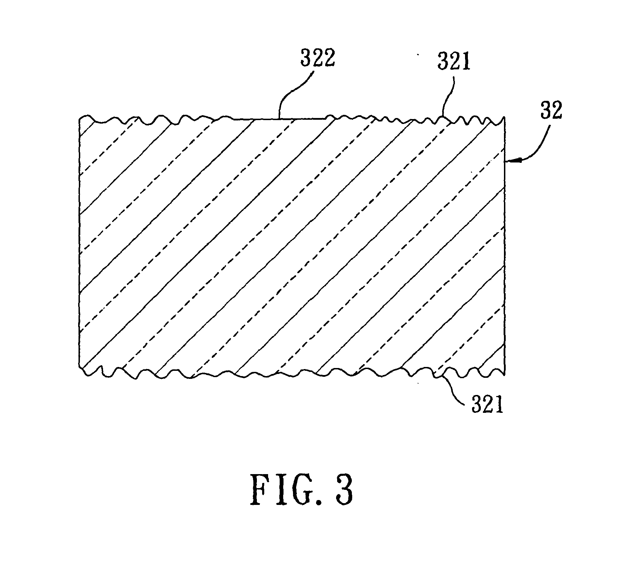

Referring to Figures 2 and 3, the first preferred embodiment of an illuminating device according to the present invention is shown to comprise a light-blending unit 3, a plurality of light-emitting members 4, and a light-gathering unit 5.

The light-blending unit 3 includes a tube body 31, and a block body 32.

The tube body 31 defines a receiving space 33 that is adapted to transmit light, and includes inner and outer wall faces 310, 311, top and bottom ends, and a reflective film 312 covering an outer wall face 311 of the tube body 31. The tube body 31 is made of a transparent material, such as glass or plastic. The reflective film 312 can be made of a highly reflective material, and can be thin film vacuum-deposited or coated on the outer wall face 311 of the tube body 31. Alternatively, the reflective film 312 may be formed through aluminum-plating, chrome-plating, or silver-plating, so as to provide the desired light reflection effect. The reflective film 312 may also be in the form of a sleeve that may be sleeved on the tube body 31.

The block body 32 is made of a transparent material, such as glass or plastic, and has top and bottom faces formed with rough surfaces 321 for dispersion of light. The transparent block body 32 has a cross section substantially corresponding to that of the receiving space 33, and is disposed within the receiving space 33 in a tight fitting manner. However, the transparent block body 32 may be connected to the tube body 31 by adhesive means. In this embodiment, the transparent block body 32 is fixed at the top open end of the tube body 31, but is not limited to such a configuration. The top and bottom rough surfaces 321 of the block body 32 are made rough by a surface-roughening treatment using a machine blade or a conventional micro-image etching process. The surface-roughening treatment may also be conducted by adhering a plurality of transparent grain-like particles to the transparent block body 32 to achieve a similar light dispersion effect.

In this embodiment, the rough surfaces 321 of the block body 32 are formed on the top and bottom faces of the block body 32. However, the present invention is not limited to the disclosed embodiment. At least one of the top and bottom faces of the block body 32 may have the rough surface 321. Alternatively, as shown in Figure 3, the entire bottom face of the block body 32 may be formed with the rough surface 321, while the top face of the block body 32 may be partly formed with the rough surface 321 and a smooth surface 322.

It should be noted that when the tube body 31 is made of a transparent material, the reflective film 312 is not limited to covering the outer wall face 311 of the tube body 31. The reflective film 312 may also cover the inner wall face 310 of the tube body 31. When the tube body 31 is made of a non-transparent material, such as a metal, which is capable of light reflection, the reflective film 312 is dispensed with.

The light-emitting members 4 are provided for emitting light rays into the receiving space 33. The light rays may have at least one predetermined color or various colors. In this embodiment, the light-emitting members 4 include three light-emitting diodes 41, 42, 43 that emit respectively red, green and blue light rays into the receiving space 33 and that are located at the bottom end of the tube body 31. However, the light-emitting members 4 may be located adjacent to and externally of the receiving space 33 so that the red, green and blue light rays emit upwardly toward the tube body 31.

The light-gathering unit 5 is located externally of the top open end of the tube body 31 for gathering the light rays exiting through the top open end of the tube body 31 and then projecting the light rays upwardly. The light-gathering unit 5 may be a focal lens, or other optical unit that achieves the same effect as a focal lens.

Through assembly of the aforementioned components, when the light-emitting diodes 41, 42, 43 emit red, green and blue light rays simultaneously and upwardly, each of the light rays is prevented from being dispersed by the reflective film 312. When the light rays project upwardly through the rough surfaces 321 of the block body 32, the light rays are dispersed, and the red, green and blue light rays are scattered in different directions, thereby producing a uniform light-blending effect. White light is generated through such blending, and after passing through the light-gathering unit 5, the generated white light is projected upwardly to produce a stronger white light.

In this embodiment, blending of three different colors of light rays is exemplified. However, the present invention is not limited to the disclosed embodiment. Blending of two different colors is also possible, or the light of a plurality of light-emitting members which emit a similar color can be blended to produce a stronger light.

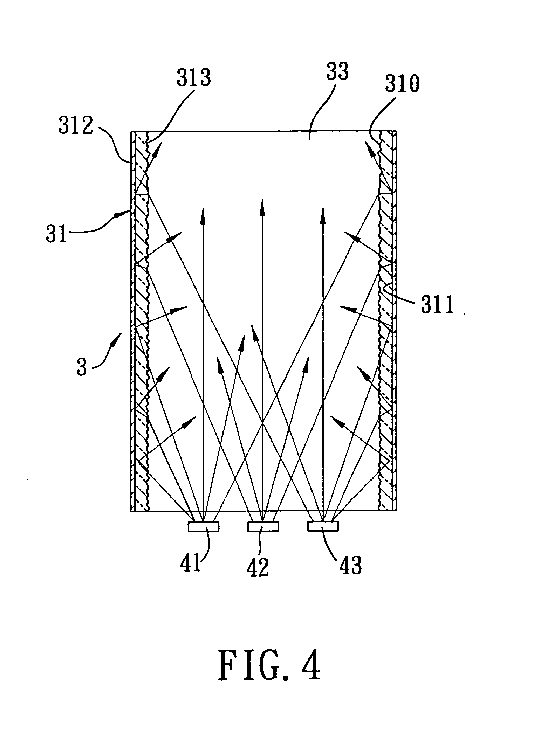

Referring to Figure 4, the second preferred embodiment of an illuminating device according to the present invention is shown to be similar to the first preferred embodiment. However, in this embodiment, the light-gathering unit 5 (see Figure 2) and the block body 32 (see Figure 2) are dispensed with. The light-blending unit 3 only includes the tube body 31, and the reflective film 312 that covers the outer wall face 311 of the tube body 31. The tube body 31 has the inner wall face 310 formed with a rough surface 313. The light-emitting diodes 41, 42, 43 are disposed adjacent to and externally of the bottom end of the tube body 31.

When the light-emitting diodes 41, 42, 43 emit light rays of respectively different colors into the receiving space 33, the light rays, through the reflective film 312 that provides a light reflecting function, and through the rough surface 313 in the inner wall face 310 of the tube body 31 that provides a light dispersing function, undergo a better light-blending effect than in the aforementioned conventional illuminating device.

Although not shown, the reflective film 312 may, in an alternative configuration, cover the rough surface 313 of the inner wall face 311 of the tube body 31, in which case, the reflective film 312 can similarly provide a reflection effect. Furthermore, through the uneven condition of the rough surface 313, a dispersion effect of the light rays may be simultaneously achieved during the reflection of light rays. If the tube body 31 is made of metal, the reflective film 312 is dispensed with, and the rough surface 313 can directly reflect light rays.

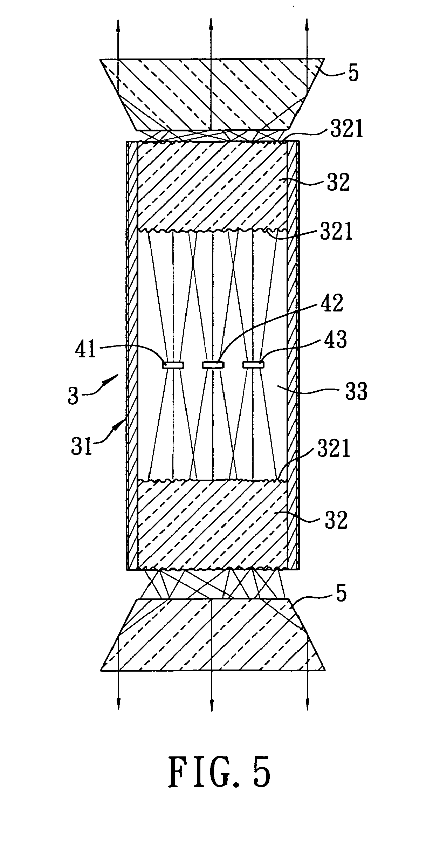

Referring to Figure 5, the third preferred embodiment of an illuminating device according to the present invention is shown to be similar to the first preferred embodiment. However, in this embodiment, the illuminating device comprises two light-gathering units 5, one of which is located externally of the top open end of the tube body 31, and the other one of which is located externally of the bottom end of the tube body 31. The light-blending unit 3 includes two transparent block bodies 32 disposed within the receiving space 33 in a spaced-apart manner. The transparent block bodies 32 are fitted respectively into the top and bottom ends of the tube body 31. The light-emitting diodes 41, 42, 43 are disposed within the receiving space 33 between the block bodies 32 to emit red, green and blue light rays upwardly and downwardly simultaneously through the block bodies 32.

The upward and downward red, green and blue light rays emitted from the light-emitting diodes 41, 42, 43 pass through the rough surfaces 321 of the respective block bodies 32 so as to obtain a uniform light-blending effect, and then project through the respective light-gathering units 5.

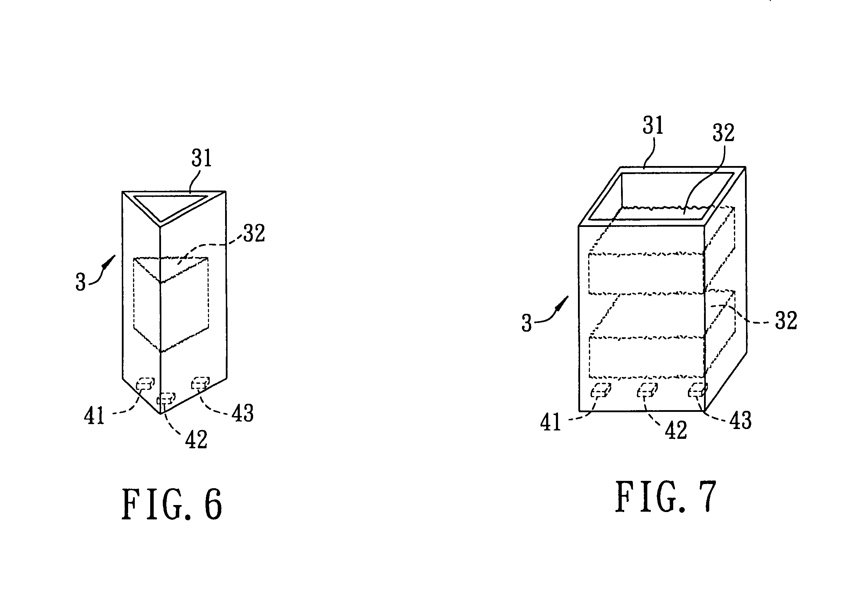

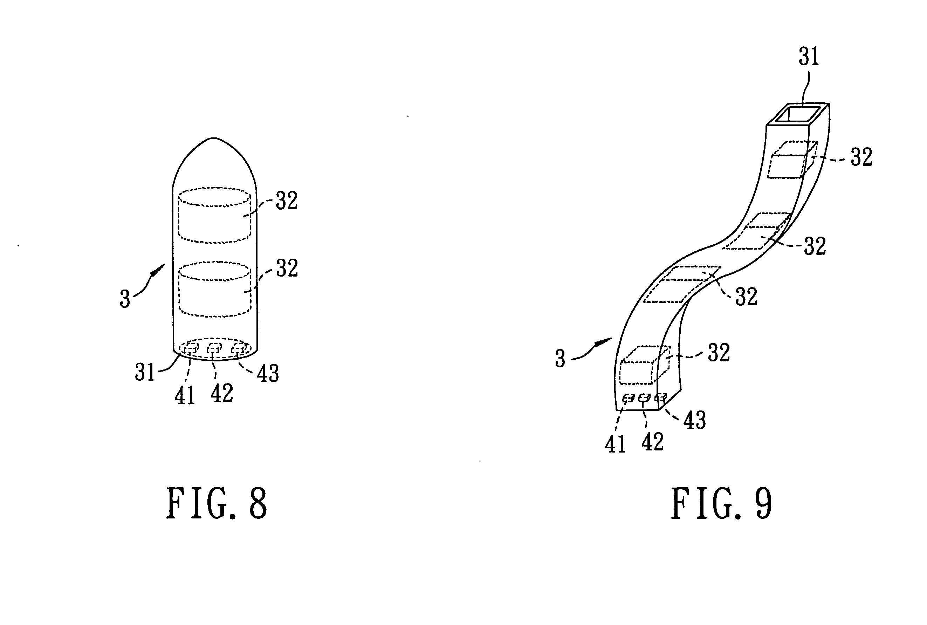

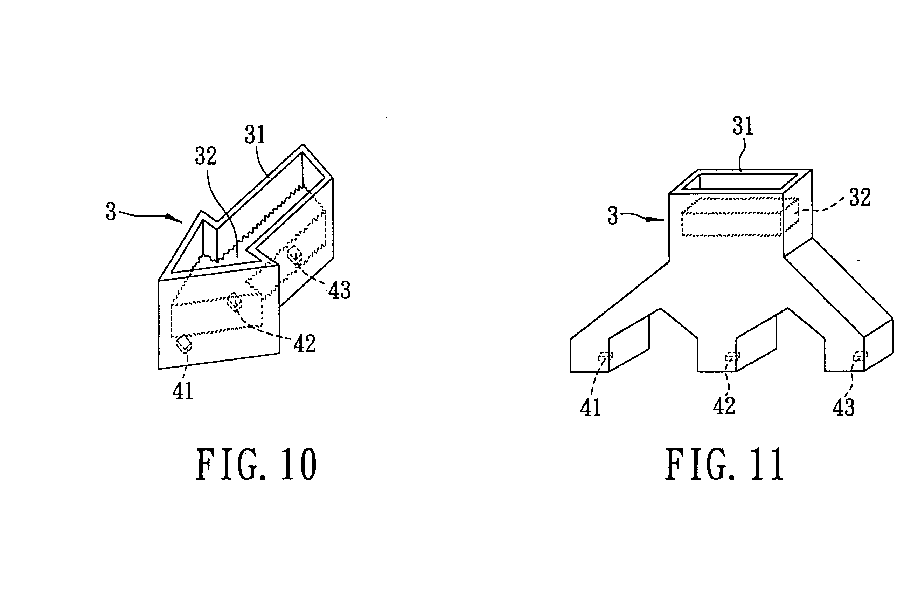

In the present invention, the shape of the tube body 31 and the number of the block bodies 32 are not limited to the disclosed embodiments. The number of the block bodies 32 may be increased as required, and the tube body 31 of the light-blending unit 3 may be formed to various configurations, as shown in Figures 6 to 11.

## Claims

1. A light-blending unit **characterized by**:
a tube body (31) defining a receiving space (33) adapted to transmit light, and including inner and outer wall faces (310, 311), and a top open end for passage of light rays therethrough, said inner wall face (310) having a rough surface (313) formed by a surface-roughening treatment for dispersion of light.

2. The light-blending unit as claimed in Claim 1, **characterized in that** said tube body (31) further includes a reflective film (312) that covers one of said inner and outer wall faces (310, 311).

3. A light-blending unit **characterized by**:
a tube body (31) capable of light reflection, said tube body (31) defining a receiving space (33) that is adapted to transmit light and having a top open end for passage of light rays therethrough; and
a transparent block body (32) fixed within said receiving space (33) and having top and bottom faces, and a rough surface (321) formed by a surface-roughening treatment for dispersion of light.

4. The light-blending unit as claimed in Claim 3, **characterized in that** said rough surface (321) is formed on one of said top and bottom faces of said transparent block body (32).

5. The light-blending unit as claimed in Claim 3, **characterized in that** said tube body (31) has inner and outer wall faces (310, 311), and a reflective film (312) that covers one of said inner and outer wall faces (310, 311).

6. An illuminating device **characterized by**:
a tube body (31) defining a receiving space (33) adapted to transmit light, and including inner and outer wall faces (310, 311), and a top open end for passage of light rays therethrough, said inner wall face (310) having a rough surface (313) formed by a surface-roughening treatment for dispersion of light; and
a plurality of light-emitting members (4) for emitting light rays into said receiving space (33), said light rays having at least one predetermined color.

7. The illuminating device as claimed in Claim 6, **characterized in that** said light-emitting members (4) emit light rays of varying color.

8. The illuminating device as claimed in Claim 6, further **characterized by** a light-gathering unit (5) located externally of said top open end of said tube body (31) for gathering the light rays exiting through said top open end, and then projecting the light rays upwardly.

9. An illuminating device **characterized by**:
a tube body (31) capable of light reflection, said tube body (31) defining a receiving space (33) that is adapted to transmit light and having a top open end for passage of light rays therethrough;
a transparent block body (32) fixed within said receiving space (33) and having top and bottom faces, and a rough surface (321) formed by a surface-roughening treatment for dispersion of light; and
a plurality of light-emitting members (4) for emitting light rays into said receiving space (33), said light rays having at least one predetermined color.

10. The illuminating device as claimed in Claim 9, **characterized in that** said rough surface (321) is formed on one of said top and bottom faces of said transparent block body (32).

11. The illuminating device as claimed in Claim 9,
**characterized in that** said light-emitting members (4) emit light rays of varying color.

12. The illuminating device as claimed in Claim 9, further **characterized by** a transparent block body (32) disposed within said receiving space (33) at said top open end of said tube body (31) and having top and bottom faces, at least one of said top and bottom faces having a rough surface (321) formed by a surface-roughening treatment for dispersion of light.

13. The illuminating device as claimed in Claim 9, **characterized in that** a plurality of said transparent block bodies (32) are disposed within said receiving space (33) in a spaced-apart manner, said light-emitting members (4) being disposed between said transparent block bodies (32) to emit light rays through said transparent block bodies (32).

14. The illuminating device as claimed in Claim 13, further **characterized by** two light-gathering units (5), one of said light-gathering units (5) being located externally of said top open end of said tube body (31), and the other one of said light-gathering units (5) being located externally of a bottom end of said tube body (31).
